(19) Europäisches Patentamt
European Patent Office
Office européen des brevets

(11) **EP 3 235 043 B1**

(12) **FASCICULE DE BREVET EUROPEEN**

(45) Date de publication et mention
de la délivrance du brevet:
**31.10.2018 Bulletin 2018/44**

(21) Numéro de dépôt: **15808648.8**

(22) Date de dépôt: **15.12.2015**

(51) Int Cl.:
*H01M 8/2425* (2016.01)    *H01M 8/0236* (2016.01)
*H01M 8/0232* (2016.01)    *H01M 8/248* (2016.01)
*H01M 8/0258* (2016.01)

(86) Numéro de dépôt international:
**PCT/EP2015/079704**

(87) Numéro de publication internationale:
**WO 2016/096793 (23.06.2016 Gazette 2016/25)**

(54) **DISPOSITIF ELECTROCHIMIQUE GENERATEUR D'ELECTRICITE DE TYPE PILE A COMBUSTIBLE A OXYDE SOLIDE**

ELEKTROCHEMISCHER STROMERZEUGER DES FESTOXIDBRENNSTOFFZELL-TYPS

ELECTROCHEMICAL POWER GENERATOR OF THE SOFC TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1462578**

(43) Date de publication de la demande:
**25.10.2017 Bulletin 2017/43**

(73) Titulaire: **Commissariat à l'Énergie Atomique et aux Énergies Alternatives**
**75015 Paris (FR)**

(72) Inventeur: **VULLIET, Julien**
**37300 Joue-les-Tours (FR)**

(74) Mandataire: **Brevalex**
**95, rue d'Amsterdam**
**75378 Paris Cedex 8 (FR)**

(56) Documents cités:
**EP-A1- 2 903 071      US-A1- 2009 092 877**
**US-A1- 2012 009 497   US-A1- 2013 071 770**

**Description**

**DOMAINE TECHNIQUE**

L'invention concerne un dispositif électrochimique générateur d'électricité de type pile à combustible à oxyde solide. Un tel dispositif peut être utilisé par exemple pour servir de démonstrateur de la technologie pile à combustible à oxyde solide haute température (ou SOFC ou « Solid Oxide Fuel Cell ») ou pour servir de générateur électrique d'appoint permettant de recharger une batterie, par exemple de portable, ou d'alimenter un ou plusieurs petits équipements électriques.

**ÉTAT DE LA TECHNIQUE ANTÉRIEURE**

Le domaine de l'invention est celui des piles à combustible à oxyde solide, qui fonctionnent à de très hautes températures, typiquement entre 450°C et 1000°C, avec une puissance de sortie allant de 50 W à plusieurs MW.

Une pile à combustible est un générateur qui permet de convertir directement l'énergie chimique réversible d'une réaction (en fait l'enthalpie libre de réaction $\Delta G$) en énergie électrique. La pile à combustible met en jeu sans les mélanger un combustible (hydrogène, méthanol, gaz naturel ...) et un comburant (oxygène pris dans l'air), et dissocie la réaction chimique en deux réactions électrochimiques d'oxydation du combustible (à l'anode) et de réduction du comburant (à la cathode). Dans une pile de type SOFC par exemple, deux molécules d'hydrogène s'associent à une molécule d'oxygène pour former deux molécules d'eau et produire de l'électricité.

La cellule élémentaire d'une pile est constituée de deux compartiments, anodique et cathodique, séparés par un conducteur ionique, l'électrolyte, et reliés par un circuit conducteur électronique extérieur. L'électrolyte sépare les réactifs, empêche les électrons de traverser le coeur de pile, et permet la migration d'espèces ioniques d'une électrode à l'autre sous l'effet du champ électrique créé par la différence de concentration en oxygène entre les deux compartiments.

Plusieurs types de piles à combustibles existent, qui se différencient essentiellement par la nature de l'électrolyte utilisé et la température de fonctionnement.

Les réactifs sont renouvelés et les produits évacués en permanence. La pile à combustible dans son ensemble, est un assemblage de cellules élémentaires reliées entre elles par des matériaux d'interconnexion, et en nombre suffisant pour assurer la production électrochimique d'électricité selon des conditions de tension et de courant voulues.

Les rendements théoriques attendus (jusqu'à 85-90% de rendement global) sont bien plus élevés que ceux obtenus grâce à une combustion classique (de l'ordre de 30%), et les émissions polluantes fortement diminuées, voire nulles si le combustible est l'hydrogène (rejet d'eau uniquement). La récupération de la chaleur relativement facile permet en outre d'envisager de la cogénération (électricité + chaleur).

Suivant le principe idéal de fonctionnement d'une pile à combustible, de l'hydrogène qui sert de combustible est introduit à l'anode et de l'oxygène qui sert de comburant est introduit à la cathode. L'oxygène utilisé est souvent celui présent dans l'air, pour des raisons de commodité, et on cherche à remplacer l'hydrogène, au vu des problèmes de stockage et de distribution de ce combustible, par du gaz naturel (constitué principalement de méthane, $CH_4$, ainsi que des alcools (tel que l'éthanol $C_2H_5OH$) et des hydrocarbures liquides (GPL) pour Gaz de Pétrole Liquéfié, constitué principalement de propane $C_3H_8$). Cependant, l'oxydation électrochimique directe de ces combustibles en $H_2$, préalablement à la réaction d'oxydation électrochimique de l'hydrogène. Il existe notamment le vaporeformage et l'oxydation partielle. La conversion du combustible peut être effectuée à l'extérieur du coeur de pile, ou dans certains cas à l'intérieur même du coeur de pile, comme pour le vaporeformage du méthane : il s'agit alors de reformage interne du combustible. L'un des atouts des piles de type SOFC, dont la température de fonctionnement est élevée, est de permettre ce reformage interne.

Le gaz naturel est essentiellement constitué de méthane. Trois réactions permettent de produire de l'hydrogène à partir du méthane :

- la réaction de vaporeformage :

$$CH_4 + H_2O \rightarrow CO + 3\,H_2,$$

($\Delta G°_{880°C}$ = -46 kJ/mol)

- la réaction d'oxydation partielle :

$$CH_4 + \tfrac{1}{2}\,O_2 \rightarrow CO + 2\,H_2.$$

($\Delta G°_{880°C}$ = -234 kJ/mol)

- la réaction de craquage :

$$CH_4 \rightarrow C + 2\,H_2.$$

$$(\Delta G°_{880°C} = \text{-27 kJ/mol})$$

L'oxydation complète (combustion) du méthane peut également se produire:

$$CH_4 + 2\,O_2 \rightarrow CO_2 + 2\,H_2O$$

$$\Delta G^0_{800°C} = \text{-800,2 kJ/mol})$$

Le détail de ces réactions chimiques des aspects thermodynamiques associés est connu du document référencé [5] en fin de description.

La plupart des dispositifs de type SOFC existant dans le monde sont des dispositifs complets (reformeur externe, système de post-combustion, récupération de chaleur ... etc), comme décrit dans les documents référencés [1] et [4], et voués à une utilisation dans un régime de fonctionnement stable donné. Différents démonstrateurs de petites dimensions, fonctionnant au gaz naturel ou au propane, comme décrit dans le document référencé [3], existent dans le monde, essentiellement développés pour un usage militaire. Ainsi la société Acumentrics, comme décrit dans le document référencé [2], commercialise des systèmes de 150 W à 10 kW, permettant de résister à des cycles de montée/descente en température rapide grâce à une technologie tubulaire. Comme décrit dans le document référencé [3], la société Ultra Electronics AMI développe des systèmes de quelques centaines de Watts pour des applications militaires et civiles.

Mais les dispositifs de l'art antérieur représentés à titre d'exemple par US 2012/009497, US 2009/092877, ou bien US 2013/071770, présentent de nombreux défauts qui sont notamment les suivants :

- les démonstrateurs, ou les dispositifs SOFC commercialisés dans le monde, nécessitent souvent un temps de montée et de descente en température important, rendant difficile des démonstrations rapides de leur principe de fonctionnement, dans un but pédagogique par exemple,
- les dispositifs SOFC proposés sont souvent complexes et coûteux, et nécessitent un savoir-faire particulier pour les faire fonctionner,
- les cycles thermiques rapides mènent généralement à la casse des cellules électrochimiques, les cellules électrochimiques ayant un coefficient d'expansion thermique plus faible d'un facteur 2 par rapport à certains types d'interconnecteurs métalliques ($10.10^{-6}\,K^{-1}$ pour les cellules $20.10^{-6}\,K^{-1}$ pour certains alliages métalliques haute température),
- la transformation du gaz utilisé (type méthane ou propane) en amont de la cellule est souvent nécessaire, ce qui complexifie le dispositif.

L'invention a pour objet un dispositif électrochimique générateur d'électricité de type pile à combustible à oxydes solides (SOFC) permettant de pallier ces inconvénients des dispositifs de l'art connu.

## EXPOSÉ DE L'INVENTION

L'invention concerne un dispositif électrochimique générateur d'électricité de type pile à combustible à oxydes solides, caractérisé en ce qu'il comprend un ensemble plan constitué d'au moins une cellule électrochimique comprise entre une première et une seconde plaques de diffusion de gaz en matériau céramique de coefficient de dilatation compris entre $8 \times 10^{-6}\,K^{-1}$ et $14 \times 10^{-6}\,K^{-1}$ percées de trous disposés de façon équidistante, une première et une seconde grilles métalliques collectrices de courant, reliés chacune à un fil conducteur permettant la circulation de courant à l'extérieur du dispositif, étant disposées de part et d'autre de ladite au moins une cellule entre cette cellule et chacune des première et seconde plaques de diffusion de gaz, et des moyens de serrage assurant le maintien mécanique de cet ensemble.

Avantageusement, les plaques de diffusion de gaz sont recourbées aux extrémités de manière à encastrer la au moins une cellule électrochimique. Le dispositif comprend en outre un premier et un second élément conducteur thermique, par exemple des plaques métalliques percées de trous, disposés de part et d'autre de la première et de la seconde plaque de diffusion de gaz pour les entourer.

Avantageusement chaque plaque de diffusion de gaz est percée de trous dont le diamètre est compris entre 4 et 6 mm, les centres de deux trous voisins étant situés à une distance de 8 à 12 mm l'un de l'autre. Chaque plaque de diffusion de gaz a une épaisseur comprise entre 3 et 10 mm. Chaque plaque de diffusion de gaz est en un des matériaux suivants: alumine, zircone ou matériau connu sous le nom de « macor » (marque déposée). Avantageusement les grilles collectrices de courant ont une conductivité électrique supérieure à 100S/m à 60°C. Elles sont par exemple réalisées dans un des matériaux suivants : nickel, platine ou or. Avantageusement les moyens de serrage assure un serrage qui correspond à un chargement de la au moins une cellule électrochimique compris entre 200 g/cm$^2$ et 1000 g/cm$^2$. Ce serrage optimal permet d'assurer un contact électrique satisfaisant tout en limitant les risques de dégradation de la cellule électrochimique lors de la montée en température.

L'invention présente de nombreux avantages, notamment les avantages suivants :

- L'invention permet la démonstration rapide du principe d'une pile à combustible de type SOFC alimentée en gaz naturel, dans un but pédagogique. En effet, la montée en température entre la température ambiante et 700°C s'effectue environ 5 minutes, contre plusieurs heures classiquement.
- L'invention permet un test non destructif de la cellule électrochimique, la conception des plaques de diffusion de gaz permettant un cyclage thermique de l'invention sans dégradation, pendant plusieurs dizaines de cycles.
- L'invention peut fournir une tension comprise entre 0,7 V et plusieurs volts (typiquement 5 V, en fonction du nombre de cellules mises en série électrique), pour alimenter différents dispositifs électriques. Une puissance de l'ordre de la dizaine de watts est alors disponible, ce qui peut évoluer en fonction de la qualité et de la surface des cellules électrochimiques.
- L'invention permet la recharge d'équipements électroniques en utilisant un réchaud à gaz, tout en gardant le bénéfice de ce réchaud à gaz pour une application différente parallèle (une cuisson, par exemple, lors d'une utilisation embarquée).
- Les problématiques de contacts et de chute ohmiques entre la cellule électrochimique et les grilles collectrices peuvent également être étudiées grâce à la la présente invention. L'effort de serrage nécessaire pour obtenir un contact électrique satisfaisant peut être optimisé en réalisant des essais en température, grâce à une montée rapide en température, ce qui représente un gain en termes de coût et de temps.
- L'invention est facile à mettre en oeuvre et peu coûteuse dans sa fabrication et dans son usage, par rapport à des dispositifs de démonstration SOFC classiques, rendant l'invention très attractive dans un but pédagogique, mais également dans un but commercial de générateur électrique à gaz embarqué.

## BRÈVE DESCRIPTION DES DESSINS

La figure 1 illustre le dispositif de l'invention dans une vue éclatée,
la figure 2 illustre un exemple de cellule électrochimique à trois couches,
-la figure 3 illustre la mise en oeuvre du dispositif de l'invention,
-les figures 4 et 5 illustrent deux variantes de réalisation du dispositif de l'invention,
-la figure 6 une courbe de la tension en fonction du courant obtenue avec un exemple de réalisation avantageux.

## EXPOSÉ DÉTAILLÉ DE MODES DE RÉALISATION PARTICULIERS

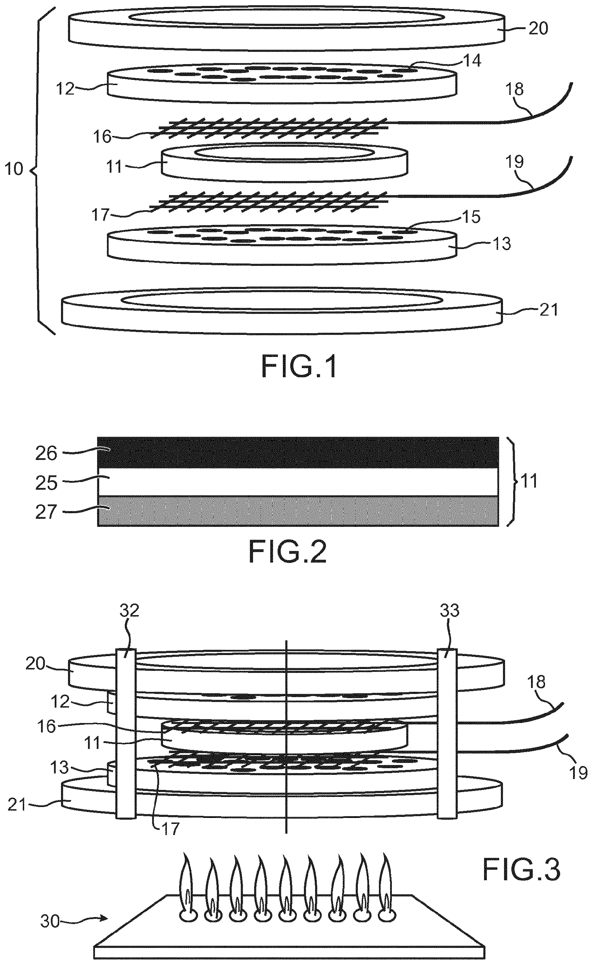

Comme illustré sur la figure 1, le dispositif électrochimique générateur d'électricité de type pile à combustible à oxyde solide, comprend un ensemble plan 10 constitué d'au moins une cellule électrochimique 11 comprise entre une première et une seconde plaques de diffusion de gaz 12 et 13 en matériau céramique de coefficient de dilatation compris entre $8 \times 10^{-6}$ K$^{-1}$ et $12 \times 10^{-6}$ K$^{-1}$ percées de trous 14 et 15 disposés de façon équidistante, une première et une seconde grilles métalliques collectrices de courant 16 et 17 reliées chacune à un fil conducteur 18 et 19 permettant la circulation de courant à l'extérieur du dispositif, étant disposées de part et d'autre de ladite au moins une cellule entre cette cellule et chacune des première et seconde de diffusion de gaz, et des moyens de serrage, par exemple à l'aide de lames 20 et 21, en forme de couronne, percées de trous et d'ensembles de tiges filetées 32 et 33 assurant le maintien mécanique de cet ensemble.

Dans l'exemple de réalisation avantageux, le dispositif de l'invention présente les caractéristiques suivantes.

Les plaques de diffusion de gaz 12 et 13 sont constituées :

- de matériaux isolants électroniques,
- dont le coefficient d'expansion thermique est compris entre $8.10^{-6}$ et $14.10^{-6}$ K$^{-1}$,
- d'une épaisseur de 3 à 10 mm,
- percés de trous de diamètre 4 à 6 mm dont les centres sont équidistants de 8 à 12 mm sur une surface égale à la ou les cellules électrochimiques utilisées.

Elles peuvent être réalisées avantageusement dans l'un des matériaux suivants : alumine, zircone ou matériau connu sous le nom de « macor » (marque déposée).

Les grilles collectrices de courant 16 et 17 présentent les caractéristiques suivantes :

- avoir une conductivité électrique supérieure à 100 S/cm à 600°C,
- résister à une température de 800°C,
- avoir un maillage compris entre 10 et 5000 mailles/cm$^2$.

Elles peuvent être réalisées avantageusement dans l'un des matériaux suivants : nickel, platine ou or.

La cellule électrochimique 11 illustrée sur la figure 2 est disposée sur la grille collectrice de courant 17 placée sur la plaque de diffusion de gaz inférieure 13 (côté gaz combustible). Cette cellule électrochimique 11 est au moins composée :

- d'un électrolyte 25 étanche à l'hydrogène, possédant une conductivité ionique élevée (supérieure à 0,01 S/cm à 700°C), un nombre de transport électronique négligeable dans l'intervalle de pressions partielles d'oxygène fixées par le combustible et le comburant (10$^{-20}$ à 0,2 atm), une bonne imperméabilité physique aux gaz, un coefficient de dilatation thermique compris entre 9.10$^{-6}$ et 12.10$^{-6}$ K$^{-1}$
- d'un matériau de cathode 26, poreux, conducteur électronique à la température de fonctionnement (conductivité électronique supérieure à 50S/cm), pouvant catalyser la réaction de réduction de l'oxygène, stable en atmosphère oxydante,
- d'un matériau d'anode 27, poreux, conducteur électronique à la température de fonctionnement (conductivité électronique supérieure à 50S/cm), pouvant catalyser la réaction d'oxydation de l'hydrogène, stable en atmosphère réductrice.

Des couches supplémentaires (le nombre de couches pouvant aller jusqu'à 10) peuvent être ajoutées pour améliorer les performances de la cellule électrochimique 11.

Le maintien mécanique de la cellule électrochimique 11 peut être assuré indifféremment par une des couches, qui doit dans ce cas être épaisse (épaisseur supérieure à 80 $\mu$m).

La grille collectrice côté air 16 est alors mise en place, puis la plaque de diffusion de gaz supérieure 12 est installée. Un serrage est alors réalisé entre les deux plaques 12 et 13 à l'aide des moyens de serrage 20, 21, 32 et 33, afin d'assurer le maintien mécanique de l'ensemble 10, et un collectage efficace du courant grâce aux grilles 16 et 17 (figure 1). Les grilles 16 et 17 sont reliées chacune à un fil conducteur permettant la circulation du courant à l'extérieur du dispositif. Ces fils 18 et 19 doivent être composés d'un matériau :

- conducteur électronique (supérieur à 100 S/cm),
- résistant à des températures élevées (700°C),
- gardant ses propriétés de conductivité électronique en atmosphérique réductrice et oxydante, jusqu'à 700°C.

Le serrage doit correspondre à un chargement de la cellule de 200 à 1000 g/cm$^2$. Ce serrage optimal permet d'assurer un contact électrique satisfaisant tout en limitant les risques de dégradation de la cellule électrochimique 11 lors de la montée en température.

Le dispositif de l'invention peut ainsi former un parallélépipède rectangle d'environ 20 cm de longueur et largeur et de 3 cm de hauteur.

Dans un exemple de mise en oeuvre illustré sur la figure 3, le dispositif de l'invention est positionné au-dessus d'un réchaud à gaz 30, par exemple de type « camping », la distance entre la flamme et la plaque inférieure de diffusion de gaz 13 étant avantageusement comprise entre 8 mm et 15 mm, dans une zone maîtrisée en termes de température et d'oxydation partielle du méthane, ce qui permet la mise en température et l'approvisionnement en hydrogène de la cellule électrochimique. L'oxygène de l'air alimente quant à lui l'électrode à air. On a ainsi les deux réactions suivantes :

- Première réaction électrochimique :

$$\tfrac{1}{2} O_2 + 2\,e^- \rightarrow O^{2-}$$

- Deuxième réaction électrochimique :

$$H_2 + O^{2-} \rightarrow H_2O + 2e^-$$

$$a\,CH_4 + b\,O_2 \rightarrow c\,H_2 + d\,CO + e\,H_2O + f\,CO_2 + chaleur$$

Une telle zone et la nature des plaques de diffusion de gaz 12 et 13 sont optimisées afin qu'une partie du gaz soit entièrement oxydée (combustion complète) et amène la chaleur nécessaire pour que la cellule électrochimique 11 ait une température de l'ordre de 600 à 700°C. Dans cette gamme de température, l'électrolyte mince de la cellule électrochimique est suffisamment conductrice ionique pour que la cellule soit performante. Une telle zone et la nature des plaques de diffusion permettent également à une partie du gaz de n'être que partiellement oxydé. Un mélange $H_2$+CO est alors formé, et ce mélange gazeux est un combustible pour la cellule électrochimique 11. L'utilisation de plaques de diffusion de gaz 12 et 13 en céramique permet d'accommoder les contraintes mécaniques liées aux gradients de température, et ainsi la cellule électrochimique 11 peut être chauffée de la température ambiante à 600 voire à 700°C en quelques minutes. Une fois que la cellule électrochimique 11 a atteint la température désirée, la circulation d'un courant est alors possible grâce aux réactions électrochimiques d'oxydation de l'hydrogène et de réduction de l'oxygène de l'air pouvant avoir lieu de chaque côté de la cellule électrochimique 11, et une tension d'environ 0,8 V par cellule apparaît aux bornes du dispositif. L'alimentation de plusieurs ampoules peut être réalisée, mais un autre dispositif pourrait être alimenté par l'invention décrite (moteur, batterie, ...). Des moyens de caractérisation électrochimique peuvent également être connectés afin d'effectuer des mesures plus fines sur les cellules connectées.

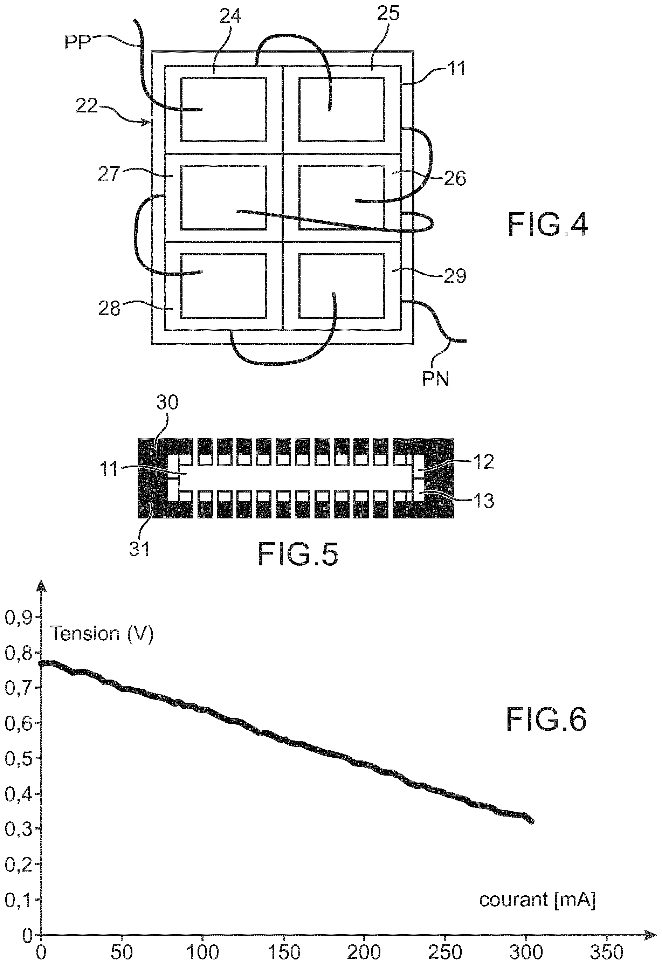

La tension aux bornes du dispositif peut être augmentée, ajustée au besoin, en reliant sur un support céramique 22 des cellules 24 à 29 en série entre elles (entre un pôle positif PP et un pôle négatif PN, par exemple comme représenté sur la figure 4. Une tension de 5 V peut alors être obtenue, et être compatible à certains appareils rechargeables sur port USB par exemple.

Comme illustré sur la figure 5, une pseudo-étanchéité suffisante peut être obtenue par encastrement des cellules 24 dans des formes correspondant à la géométrie des cellules dans la plaque de diffusion inférieure 13. La combustion complète du méthane (liée à un court-circuit gaz sur le pourtour des cellules) est alors suffisamment empêchée pour que la cellule électrochimique 11 puisse fonctionner.

Comme illustré sur la figure 5, les plaques de diffusion de gaz 12 et 13 peuvent être recourbées aux extrémités de manière à entourer la au moins une cellule électrochimique 11. Le dispositif de l'invention comprend alors un premier et un second éléments conducteurs thermiques 30, 31, tels que des plaques métalliques percées de trous, disposés de part et d'autre de la première et de la seconde plaque de diffusion de gaz 12 et 13 pour les entourer, ce qui permet d'exploiter la chaleur délivrée par un réchaud en redistribuant cette chaleur en partie supérieure du dispositif de l'invention. Les trous des plaques de diffusion de gaz 12 et 13 correspondent aux trous des plaques métalliques 30 et 31. Par conduction les plaques métalliques 30, 31 font la jonction entre la partie inférieure et la partie supérieure du dispositif de l'invention, et permettent de chauffer un objet posé sur la partie supérieure.

Exemple de réalisation

Dans un exemple de réalisation avantageux, les différents éléments utilisés sont les suivants :

- Pour les plaques de diffusion de gaz 12 et 13 :

  - matériau utilisé : matériau connu sous le nom de « MACOR » (marque déposée),
  - distance entre trous de 9 mm,
  - diamètre des trous de 5 mm,
  - épaisseur : 6,5 mm,

- Pour les grilles collectrices de courant 16 et 17 :

  - matériau : platine,
  - maillage : 3600 mailles/cm$^2$,

- Pour la cellule électrochimique 11 :

  - cellule à anode épaisse (anode support) de 500 $\mu$m en matériau Ni/8YSZ,
  - électrolyte en 8YSZ de 8 $\mu$m d'épaisseur,
  - électrode à air en LaSrCoFeO$_3$ de 25 $\mu$m d'épaisseur,

- Pour les fils conducteurs 18 et 19 utilisés :

  - matériau : platine,
  - diamètre du fil : 1 mm

Un tel exemple de réalisation permet l'alimentation et le bon fonctionnement de plusieurs ampoules. D'autre part, une courbe de polarisation (courant/tension) peut être réalisée afin de caractériser plus finement les performances électrochimiques de l'invention. Une densité de courant d'environ 300 mA/cm$^2$ est ainsi obtenue à 0,3 V, comme illustré sur la figure 6. 10 cycles thermiques entre la température ambiante et la température de fonctionnement sont réalisés sans dégradation des performances de la cellule électrochimique.

**REFERENCES**

[1] "Fifteen years of SOFC development in Australia" de K. Föger et J.G. Love ("Solid state ionics", pages 119-116, 2004),
[2] "Thermochemical model and experimental validation of a tabular SOFC cell comprised in a 1 kW stack designed for μlCHP applications" de Carlos Boigues-Munoz, Giulio Santori, Stephen McPhail et Fabio Polonara (International Journal of hydrogen energy 39, pages 21714 - 21723, 7 octobre 2014),
[3] "Microtubular SOFC anode optimization for direct use on methane" de A. Dhir et K. Kendall (Journal of Power sources, 2008, pages 297-303),
[4] "The cost of domestic fuel cell micro-CHP systems" de lain Staffel et Richard Green (International Journal of hydrogen energy 38, 2013, pages 1088-1102)
[5] "Hydrogen production by coupled catalytic partial oxidation and steam methane reforming at elevated pressure and temperature" de Luwei Chen, Qi Hong, Jianyi Lin et F.M. Dautzenberg (Journal of Power Sources. 164, 2007, pages 803-808).

**Revendications**

1. Dispositif électrochimique générateur d'électricité de type à pile à combustible à oxyde solide, **caractérisé en ce qu'**il comprend un ensemble plan (10) constitué d'au moins une cellule électrochimique (11) comprise entre une première et une second plaques de diffusion de gaz (12, 13) en matériau céramique de coefficient de dilatation compris entre 8 x 10$^{-6}$ K$^{-1}$ et 14 x 10$^{-6}$ K$^{-1}$ percées de trous (14, 15) disposés de façon équidistante, une première et une seconde grilles métalliques collectrices de courant (16, 17), reliées chacune à un fil conducteur (18, 19) permettant la circulation de courant à l'extérieur du dispositif, étant disposées de part et d'autre de ladite au moins une cellule électrochimique (11) entre cette cellule et chacune des première et second plaques de diffusion de gaz, et des moyens de serrage (20, 21) assurant le maintien mécanique de cet ensemble plan (10).

2. Dispositif selon la revendication 1, dans lequel les plaques de diffusion des gaz sont recourbées aux extrémités de manière à encastrer le au moins une cellule électrochimique.

3. Dispositif selon la revendication 2, comprenant un premier et un second élément conducteur thermique (30, 31) disposés de part et d'autre de la première et de la seconde plaque de diffusion de gaz pour les entourer.

4. Dispositif selon la revendication 3, dans lequel les premier et second éléments conducteurs thermiques sont des plaques métalliques percées de trous.

5. Dispositif selon la revendication 1, dans lequel chaque plaque de diffusion de gaz est percée de trous dont le diamètre est compris entre 4 et 6 mm, les centres de deux trous voisins étant situés à une distance de 8 à 12 mm l'un de l'autre.

6. Dispositif selon la revendication 1, dans lequel chaque plaque de diffusion de gaz a une épaisseur comprise entre 3 et 10 mm.

7. Dispositif selon la revendication 1, dans lequel chaque plaque de diffusion de gaz est réalisée en un des matériaux suivants : alumine, zircone ou matériau connu sous le nom de « macor» (marque déposée).

8. Dispositif selon la revendication 1, dans lequel les grilles métalliques collectrices de courant ont une conductivité électrique supérieure à 100S/m à 600°C.

9. Dispositif selon la revendication 1, dans lequel les grilles métalliques collectrices de courant sont réalisées dans l'un des métaux suivants : nickel, platine ou or.

**10.** Dispositif selon la revendication 1, dans lequel les moyens de serrage assure un serrage qui correspond à un chargement de la au moins une cellule électrochimique comprise entre 200 g/cm$^2$ et 1000 g/cm$^2$.

**Patentansprüche**

**1.** Elektrochemische Stromerzeugungsvorrichtung vom Typ Festoxidbrennstoffzelle, **dadurch gekennzeichnet, dass** sie eine ebene Gesamtanordnung (10) umfasst, gebildet mit wenigstens einer elektrochemischen Zelle (11), die zwischen einer ersten und einer zweiten Gasdiffusionsplatte (12, 13) aus keramischem Material mit einem Ausdehnungskoeffizienten enthalten ist, der zwischen 8 x 10$^{-6}$ K$^{-1}$ und 14 x 10$^{-6}$ K$^{-1}$ enthalten ist, in die Löcher (14, 15) gebohrt sind, die in äquidistanter Weise angeordnet sind, wobei ein erstes und ein zweites metallisches Stromsammelgitter (16, 17), die jeweils mit einem leitenden Draht (18, 19) verbunden sind, welcher die Zirkulation von Strom außerhalb der Vorrichtung ermöglicht, auf beiden Seiten der wenigstens einen elektrochemischen Zelle (11) zwischen dieser Zelle und jeder von der ersten und der zweiten Gasdiffusionsplatte angeordnet sind, sowie Spannmittel (20, 21), die den mechanischen Halt dieser ebenen Gesamtanordnung (10) gewährleisten.

**2.** Vorrichtung nach Anspruch 1, bei der die Gasdiffusionsplatten an den Enden derart gekrümmt sind, dass sie die wenigstens eine elektrochemische Zelle einspannen.

**3.** Vorrichtung nach Anspruch 2, umfassend ein erstes und ein zweites thermisch leitendes Element (30, 31), die auf beiden Seiten der ersten und der zweiten Gasdiffusionsplatte angeordnet sind, um sie zu umgeben.

**4.** Vorrichtung nach Anspruch 3, bei der das erste und das zweite thermisch leitende Element Metallplatten sind, in die Löcher gebohrt sind.

**5.** Vorrichtung nach Anspruch 1, bei der in jede Gasdiffusionsplatte Löcher gebohrt sind, deren Durchmesser zwischen 4 und 6 mm enthalten ist, wobei die Zentren von zwei benachbarten Löchern in einem Abstand von 8 bis 12 mm zueinander angeordnet sind.

**6.** Vorrichtung nach Anspruch 1, bei der jede Gasdiffusionsplatte eine Dicke hat, die zwischen 3 und 10 mm enthalten ist.

**7.** Vorrichtung nach Anspruch 1, bei der jede Gasdiffusionsplatte aus einem der folgenden Materialien hergestellt ist: Aluminiumoxid, Zirkonoxid oder ein unter dem Namen "Macor" (eingetragene Marke) bekanntes Material.

**8.** Vorrichtung nach Anspruch 1, bei der die metallisches Stromsammelgitter eine elektrische Leitfähigkeit größer als 100S/m bei 600°C haben.

**9.** Vorrichtung nach Anspruch 1, bei der die metallischen Stromsammelgitter aus einem der folgenden Metalle hergestellt sind: Nickel, Platin oder Gold.

**10.** Vorrichtung nach Anspruch 1, bei der die Spannmittel ein Spannen sicherstellen, das einer Belastung der wenigstens einen elektrochemischen Zelle entspricht, die zwischen 200 g/cm$^2$ und 1000 g/cm$^2$ enthalten ist.

**Claims**

**1.** Electricity generating electrochemical device of the solid-oxide fuel-cell type, **characterised in that** it comprises a planar assembly (10) made of at least one electrochemical cell (11) between first and second gas diffusion plates (12, 13) made of a ceramic material with a coefficient of expansion between 8 x 10$^{-6}$ K$^{-1}$ and 14 x 10$^{-6}$ K$^{-1}$ and in which equidistant holes (14, 15) are formed, first and second current collection metal grids (16, 17), each connected to a conducting wire (18, 19) allowing current to flow outside the device, being located on each side of said at least one electrochemical cell (11) between this cell and each of the first and second gas diffusion plates, and clamping means (20, 21) mechanically holding this planar assembly (10).

**2.** Device according to claim 1, in which the gas diffusion plates are curved at their ends so as to embed the at least one electrochemical cell.

**3.** Device according to claim 2, comprising a first and a second heat conducting element (30, 31) arranged on each side of the first and second gas diffusion plates to surround them.

4. Device according to claim 3, in which the first and second heat conducting elements are metal plates in which holes are formed.

5. Device according to claim 1, in which holes are formed in each gas diffusion plate with a diameter of between 4 and 6 mm, the centres of two adjacent holes being located at a distance of 8 to 12 mm from each other.

6. Device according to claim 1, in which the thickness of each gas diffusion plate is between 3 and 10 mm.

7. Device according to claim 1, in which each gas diffusion plate is made from one of the following materials: alumina, zirconia or a material known as "macor" (registered trademark).

8. Device according to claim 1, in which the electrical conductivity of the current collection metal grids is higher than 100S/m at 60°C.

9. Device according to claim 1, in which the current collection metal grids are made from one of the following materials: nickel, platinum or gold.

10. Device according to claim 1, in which the clamping means clamp such that the clamping pressure on the at least one electrochemical cell is between 200g/cm$^2$ and 1000 g/cm$^2$.

FIG.1

FIG.2

FIG.3

FIG.4

FIG.5

FIG.6

## RÉFÉRENCES CITÉES DANS LA DESCRIPTION

**Documents brevets cités dans la description**

- US 2012009497 A
- US 2009092877 A
- US 2013071770 A

**Littérature non-brevet citée dans la description**

- **DE K. FÖGER ; J.G. LOVE.** Fifteen years of SOFC development in Australia. *Solid state ionics,* 2004, 119-116
- **DE CARLOS BOIGUES-MUNOZ ; GIULIO SANTORI ; STEPHEN MCPHAIL ; FABIO POLONARA.** Thermochemical model and experimental validation of a tabular SOFC cell comprised in a 1 kW stack designed for $\mu$lCHP applications. *International Journal of hydrogen energy,* 07 Octobre 2014, vol. 39, 21714-21723
- **DE A. DHIR ; K. KENDALL.** Microtubular SOFC anode optimization for direct use on methane. *Journal of Power sources,* 2008, 297-303
- **DE LAIN STAFFEL ; RICHARD GREEN.** The cost of domestic fuel cell micro-CHP systems. *International Journal of hydrogen energy,* 2013, vol. 38, 1088-1102
- **DE LUWEI CHEN ; QI HONG ; JIANYI LIN ; F.M. DAUTZENBERG.** Hydrogen production by coupled catalytic partial oxidation and steam methane reforming at elevated pressure and temperature. *Journal of Power Sources,* 2007, vol. 164, 803-808